# EUROPÄISCHE PATENTANMELDUNG

(11) **EP 1 448 001 A1**
(43) Veröffentlichungstag der Anmeldung: **18.08.2004**
(21) Anmeldenummer: 03003071.2
(22) Anmeldetag: 12.02.2003
(51) Int. Cl.: H04Q 7/30

(54) **Regeln zur Sprach-Qualitäts-Bearbeitung**

(71) Anmelder: SIEMENS AKTIENGESELLSCHAFT, 80333 München (DE)
(72) Erfinder: Kampschulte, Bernd, 81379 München (DE); Landgraf, Rainer, 86807 Buchloe (DE); Vallentin, Claudia, 80639 München (DE); Zaus, Robert, Dr., 80686 München (DE)

(57) **Zusammenfassung**

Eine einfache und effiziente Möglichkeit zur Verbesserung der Sprachqualität von über eine Telekommunikationsverbindung durch mindestens ein mobiles Kommunikationsnetz übertragenen Daten, dadurch gekennzeichnet, dass bei über eine Telekommunikationsverbindung übertragene Daten eine Sprach-Qualitäts-Bearbeitung von dem Netzknoten (6, 10, 8, 16, 17, 15) des Kommunikationsnetzes ausgeführt wird, der sich längs der Telekommunikationsverbindung am nähesten zu einer Funk-Schnittstelle (2) der Telekommunikationsverbindung befindet und dass eine Sprach-Qualitäts-Bearbeitung nur bei in Uplink-Richtung übermittelten Daten durchgeführt wird.

## Beschreibung

Die Erfindung betrifft ein Verfahren und eine Vorrichtung zur Verbesserung der Sprachqualität von über eine Telekommunikationsverbindung durch mindestens ein mobiles Kommunikationsnetz übertragenen Daten.

Bei mehrfachem Hintereinanderschalten von Sprach-Qualitäts-Bearbeitungs-Geräten (VQE-Geräte) kann es zu einer Verschlechterung der Sprachqualität kommen, z.B. könnte es bei einer mehrfachen Anwendung einer Rauschunterdrückung nicht nur zu einer Reduzierung der Hintergrundsgeräusche, sondern auch zu einer Verschlechterung des eigentlichen Sprachsignals kommen.
Daher sollte eine Sprach-Qualitäts-Bearbeitung (VQE) für jede Richtung oder jede Teilnehmerseite, nur einmal durchgeführt werden. Es gibt drei Anwendungsgebiete für die Sprach-Qualitäts-Bearbeitung (VQE) mit einem Algorithmus:
- Die Steuerung des akustischen Echos wird verwendet um das Echo, das in Lautsprechern entsteht, zu abzugleichen
- Die Reduzierung des Hintergrundrauschens und des generellen Breitband-Rauschens kann mit minimalen Qualitätsverlust der zu übertragenden Sprachdaten geschehen.
- Mit Hilfe der automatischen Niveau-Steuerung kann die Lautstärke eines Mobilfunkendgerätes auf ein definiertes Limit abgeglichen werden.

Aufgabe der vorliegenden Erfindung ist es, eine kosteneffiziente und leicht zu implementierende Lösung zur Verbesserung der Sprachqualität in einem mobilen Kommunikationsnetz anzubieten.
Die Aufgabe wird erfindungsgemäß durch die Gegenstände der unabhängigen Patentansprüche bezüglich des Verfahrens und der Vorrichtung gelöst. Weiterbildungen der Erfindung sind in den Unteransprüchen angegeben. Kern der Erfindung ist, dass bei einer Telekommunikationsverbindung zwischen zwei Mobilfunkendgeräten in einem mobilen Kommunikationsnetz eine Sprach-Qualitäts-Bearbeitung (VQE) jeweils nur einmal, und zwar in Uplink-Richtung, durchgeführt wird. Uplink-Richtung bedeutet, däss Daten und/oder Sprache von einem Mobilfunkendgerät zu einem Empfangsknoten in einem Kommunikationsnetz übermittelt werden. Die Erfindung ermöglicht es bei Einhaltung in allen Netzknoten während des Verbindungsaufbaus und der gesamten Telekommunikationsverbindung, dass jeder Netzknoten selbstständig entscheiden kann, ob und in welcher Richtung eine Sprach-Qualitäts-Bearbeitung (VQE) durchgeführt werden soll. Der einzelne Netzknoten benötigt dafür keine weiteren Informationen über seine benachbarten Netzknoten und/oder die Art der Telekommunikationsverbindung.

Die Erfindung wird anhand eines in den Figuren dargestellten Ausführungsbeispiels näher erläutert. Exemplarisch wird anhand eines mobilen Kommunikationsnetzes der zweiten Generation (2G), wie einem GSM-Netz und eines mobilen Kommunikationsnetzes der dritten Generation (3G), wie einem UMTS-Netz erläutert. Die Erfindung ist jedoch grundsätzlich für alle zellularen Kommunikationsnetze, wie z. B. UMTS (3G), CDMA 2000 (3G), CDMA One (2G), GSM (2G), TDMA (2G), etc. anwendbar. Im Einzelnen zeigen
- Figur 1: die Durchführung eines erfindungsgemäßen Verfahrens bei einer Telekommunikationsverbindung zwischen zwei Mobilfunkendgeräten in einem UMTS-Netz,
- Figur 2: die Durchführung eines erfindungsgemäßen Verfahrens bei einer Telekommunikationsverbindung zwischen einem Mobilfunkendgerät in einem UMTS-Netz und einem Festnetzendgerät in einem stationären Netz,
- Figur 3: die Durchführung des erfindungsgemäßen Verfahrens bei einem Handover in einem UMTS-Netz,
- Figur 4: die Durchführung eines erfindungsgemäßen Verfahrens bei einer Telekommunikationsverbindung zwischen zwei Mobilfunkendgeräten in einem GSM-Netz,
- Figur 5: die Durchführung eines erfindungsgemäßen Verfahrens bei einer Telekommunikationsverbindung zwischen einem Mobilfunkendgerät in einem GSM-Netz und einem Festnetzendgerät in einem stationären Netz,
- Figur 6: die Durchführung eines erfindungsgemäßen Verfahrens bei einem Handover in einem GSM-Netz,
- Figur 7: die Durchführung eines erfindungsgemäßen Verfahrens bei einer Telekommunikationsverbindung zwischen einem Mobilfunkendgerät in einem UMTS-Netz und einem Mobilfunkendgerät in einem GSM-Netz,
- Figur 8: die Durchführung des erfindungsgemäßen Verfahrens bei einem Handover zwischen einem UMTS-Netz und einem GSM-Netz,
- Figur 9: die Durchführung der Sprach-Qualitäts-Bearbeitung in einem Netzknoten.

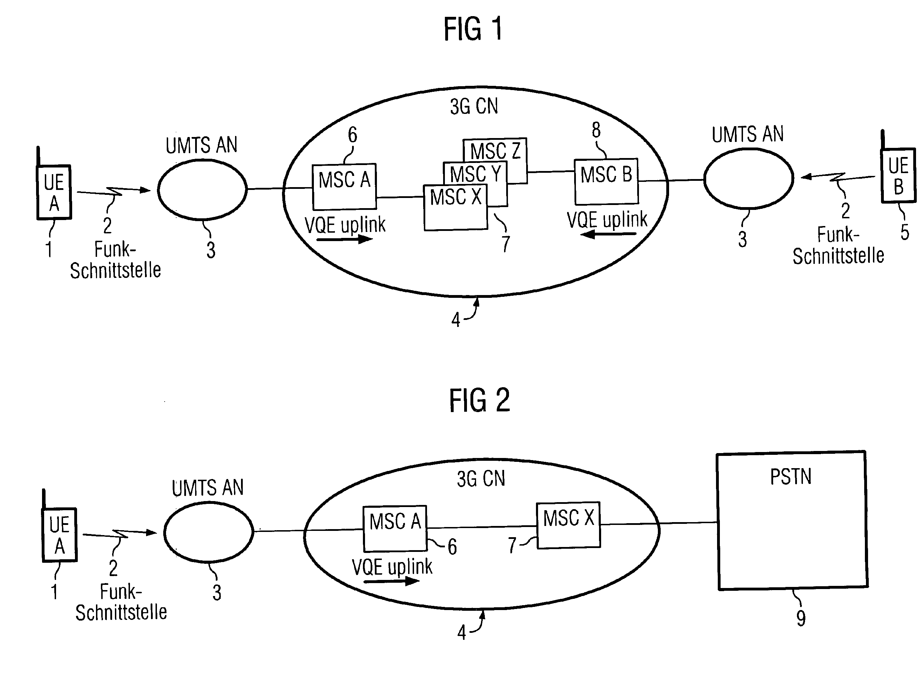

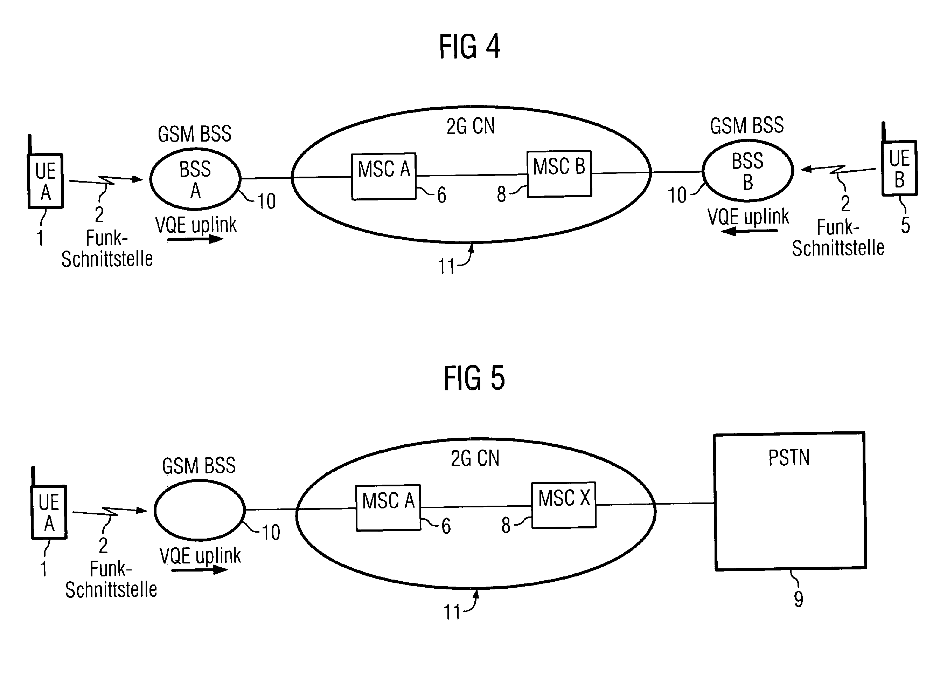

Figur 1 beschreibt, wie eine Sprach-Qualitäts-Bearbeitung (VQE) bei einer Telekommunikationsverbindung zwischen zwei Mobilfunkendgeräten 1, 5 in einem UMTS-Netz nur von dem Netzknoten 15 (siehe Fig. 9) ausgeführt wird, der sich längs der Telekommunikationsverbindung am nähesten zur Funk-Schnittstelle befindet. Eine Telekommunikationsverbindung stellt eine Telekommunikationsverbindung für z. B. Sprachdaten dar. Ein solcher Netzknoten 15 kann z. B. eine Vermittlungseinrichtung (MSC) 6, 8 in einem UMTS Netz, eine Einrichtung innerhalb eines Basis-Station-Subsystems (BSS) 10 in einem GSM Netz (siehe Fig. 4) oder eine ähnliche Einrichtung in einem mobilen Kommunikationsnetz sein.
Ein Mobilfunkendgerät 1 sendet Daten und/oder Sprache über eine Funk-Schnittstelle 2 zu einem UMTS-Zugangsnetz (UMTS AN) 3. Daten und/oder Sprache, die von einem Mobilfunkendgerät 1 gesendet werden, werden von einem UMTS-Zugangsnetz 3 zu einer Vermittlungseinrichtung (MSC) 6 in einem UMTS-Kernnetz (3G CN) 4 übermittelt. Die Vermittlungseinrichtung 6 leitet die Daten und/oder Sprache des Mobilfunkendgerätes 1 an weitere Vermittlungseinrichtungen 7, 8 weiter. Über ein Zugangsnetz 3 und eine Funk-Schnittstelle 2 empfängt ein weiteres Mobilfunkendgerät 5 die von einem Mobilfunkendgerät 1 gesendeten Daten und/oder Sprache. Die Sprach-Qualitäts-Bearbeitung (VQE) wird dabei nur in Uplink-Richtung und von dem Netzknoten, der sich längs der Telekommunikationsverbindung am nähesten an einer Funk-Schnittstelle 2 befindet, durchgeführt. Diese Bedingungen bzw. Kriterien sind für das Mobilfunkendgerät 1 vom Netzknoten 6 erfüllt, der somit eine Sprach-Qualitäts-Bearbeitung (VQE) durchführen kann. Das weitere Mobilfunkendgerät 5 sendet in gleicher Weise wie das erste Mobilfunkendgerät 1 Daten und/oder Sprache über eine Funk-Schnittstelle 2 an ein UMTS-Zugangsnetz 3, welches die Daten und/oder Sprache an eine Vermittlungseinrichtung 8 weiterleitet. Für das Mobilfunkendgerät 5 sind die VQE-Kriterien in der Vermittlungseinrichtung 8 erfüllt, weshalb dort die Sprach-Qualitäts-Bearbeitung (VQE) in Uplink-Richtung durchgeführt wird. Danach können die zu übermittelnden Daten und/oder Sprache über weitere Vermittlungseinrichtungen 6, 7 an ein UMTS-Zugangsnetz 3 weitergeleitet werden. Vom UMTS-Zugangsnetz 3 gelangen die Daten und/oder Sprache über eine Funk-Schnittstelle 2 zu dem ersten Mobilfunkendgerät 1. Da nur in den beiden Vermittlungseinrichtungen 6 und 8 jeweils nur in Uplink-Richtung eine Sprach-Qualitäts-Bearbeitung (VQE) erfolgt, wird eine mehrfache Sprach-Qualitäts-Bearbeitung (VQE) und eine damit verbundene Qualitätsminderung der übertragenen Sprachsignale verhindert.

Figur 2 zeigt, wie bei einer Telekommunikationsverbindung zwischen einem Mobilfunkendgerät 1 in einem UMTS-Netz und einem Festnetzendgerät in einem stationären Netz 9 die Sprach-Qualitäts-Bearbeitung (VQE) durchgeführt wird. Ein Mobilfunkendgerät 1 sendet über eine Funk-Schnittstelle 2 Daten und/oder Sprache an ein UMTS-Zugangsnetz 3. Von dort werden die Daten und/oder Sprache an eine Vermittlungseinrichtung 6 in einem UMTS Kernnetz (3G CN) 4 weitergeleitet. Die Vermittlungseinrichtung 6 führt eine Sprach-Qualitäts-Bearbeitung (VQE) in Uplink-Richtung durch und leitet die Daten und/oder Sprache an eine weitere Vermittlungseinrichtung 7 weiter. Von dort werden die Daten und/oder Sprache in ein Festnetz (PSTN) 9 übermittelt. Sprachdaten, die vom Festnetz 9 in ein mobiles Kommunikationsnetz transportiert werden, unterliegt im Festnetz 9 bzw. am Übergang zum mobilen Kommunikationsnetz eigenen Mechanismen zur Sprachverbesserung, sodass nur für von einem Mobilfunkendgerät 1 stammende Daten (in Uplink-Richtung) eine Sprach-Qualitäts-Bearbeitung (VQE) durchgeführt wird.

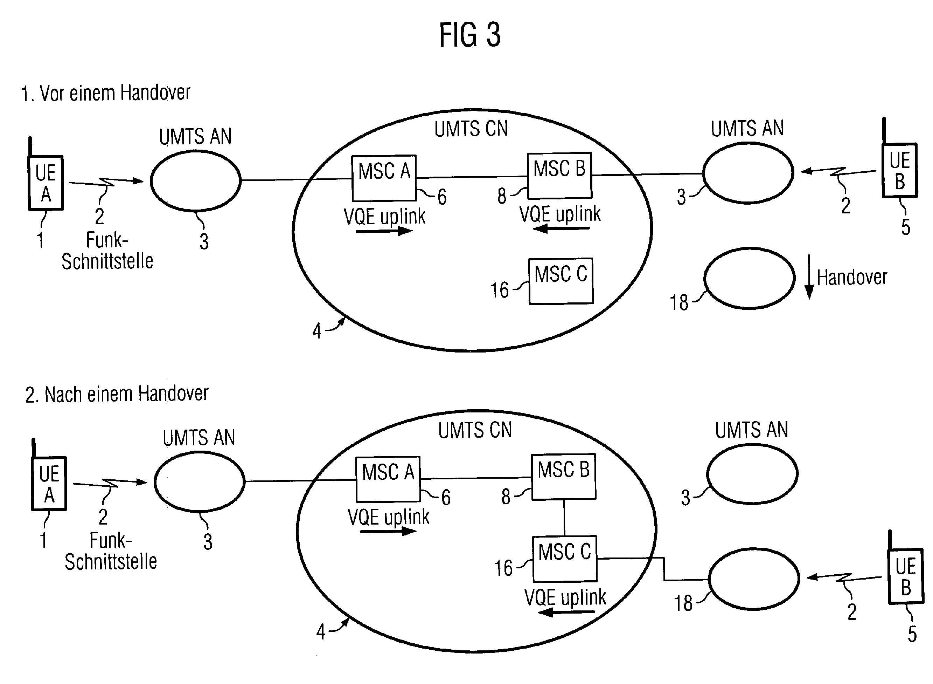

Figur 3 zeigt, wie nach einem Handover diejenige Vermittlungseinrichtung 16 eine Sprach-Qualitäts-Bearbeitung (VQE) durchführt, welche sich längs der Telekommunikationsverbindung zwischen Mobilfunkendgerät und Vermittlungseinrichtung 16 am nähesten an einer Funk-Schnittstelle 2 befindet. Vor einem Handover sendet ein Mobilfunkendgerät 5 über eine Funk-Schnittstelle 2 an ein UMTS-Zugangsnetz 3 Daten und/oder Sprache. Von dort werden die Daten und/oder Sprache an eine Vermittlungseinrichtung 8 weitergeleitet, die in Uplink-Richtung eine Sprach-Qualitäts-Bearbeitung (VQE) durchführt. Danach werden die Daten und/oder Sprache über eine weitere Vermittlungseinrichtung 6, ein UMTS-Zugangsnetz 3 und eine Funk-Schnittstelle 2 an ein Mobilfunkendgerät 1 übermittelt. Wird ein Handover durchgeführt, d. h. bewegt sich z. B. das Mobilfunkendgerät 5 in ein neues UMTS-Zugangsnetz 18, das an eine andere Vermittlungseinrichtung 16 angeschlossen ist, so werden die Daten und/oder Sprache über eine Funk-Schnittstelle 2 an ein weiteres UMTS-Zugangsnetz 18 übermittelt. Die Sprach-Qualitäts-Bearbeitung (VQE) wird in Uplink-Richtung nun von der Vermittlungseinrichtung 16 durchgeführt, da diese sich am nähesten zu einer Funk-Schnittstelle 2 befindet. Die Daten und/oder Sprache werden dann über weitere Vermittlungseinrichtungen 8, 6 im UMTS-Kernnetz 4 an ein UMTS-Zugangsnetz 3 übermittelt und über eine Funk-Schnittstelle 2 an ein Mobilfunkendgerät 1 weitergeleitet.

Figur 4 beschreibt, wie eine Sprach-Qualitäts-Bearbeitung (VQE) bei einer Telekommunikationsverbindung zwischen zwei Mobilfunkendgeräten 1, 5 in einem GSM-Netz nur von dem Netzknoten 10 ausgeführt wird, der sich längs der Telekommunikationsverbindung am nähesten zur Funk-Schnittstelle befindet. Das erfindungsgemäße Verfahren wird durchgeführt, wie in Figur 1, jedoch führt ein Basis-Station-Subsystem (BSS) 10, das sich längs der Telekommunikationsverbindung am nähesten zur Funk-Schnittstelle befindet, in Uplink-Richtung die Sprach-Qualitäts-Bearbeitung (VQE) durch.

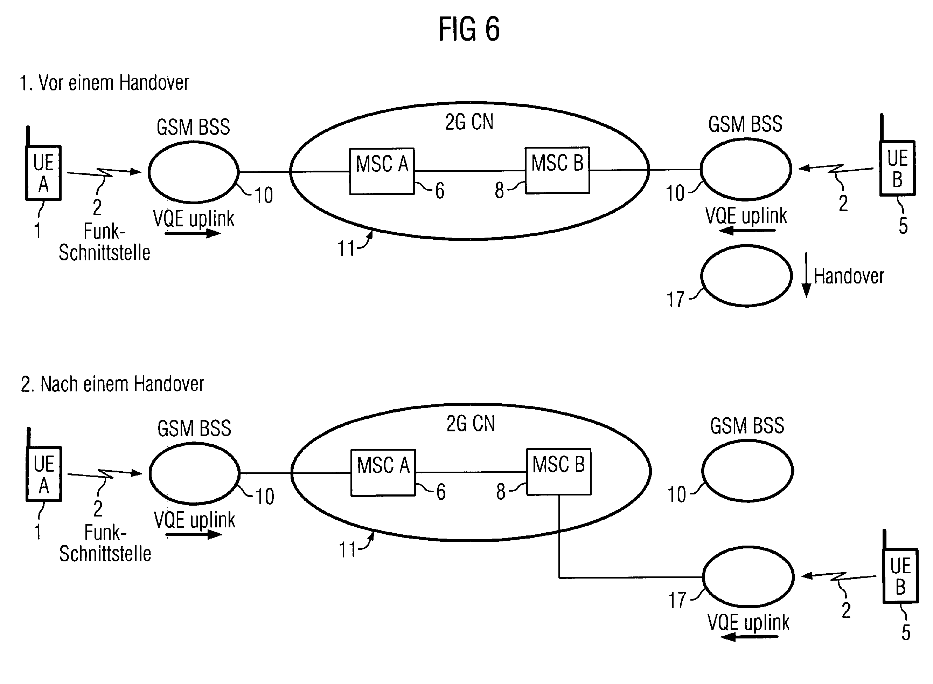

Figur 5 zeigt, wie bei einer Telekommunikationsverbindung zwischen einem Mobilfunkendgerät 1 in einem GSM-Netz und einem Festnetzendgerät in einem stationären Netz 9 die Sprach-Qualitäts-Bearbeitung (VQE) durchgeführt wird. Das erfindungsgemäße Verfahren wird durchgeführt, wie in Figur 2, jedoch führt ein Basis-Station-Subsystem (BSS) 10, das sich längs der Telekommunikationsverbindung am nähesten zur Funk-Schnittstelle befindet, in Uplink-Richtung die Sprach-Qualitäts-Bearbeitung (VQE) durch.

Figur 6 zeigt, wie nach einem Handover das Basis-Station-Subsystem (BSS) 17 eine Sprach-Qualitäts-Bearbeitung (VQE) durchführt, das sich längs der Telekommunikationsverbindung am nähesten an einer Funk-Schnittstelle 2 befindet. Das erfindungsgemäße Verfahren wird durchgeführt, wie in Figur 3, jedoch führt ein Basis-Station-Subsystem (BSS) 10, das sich längs der Telekommunikationsverbindung am nähesten zur Funk-Schnittstelle befindet, in Uplink-Richtung die Sprach-Qualitäts-Bearbeitung (VQE) durch.

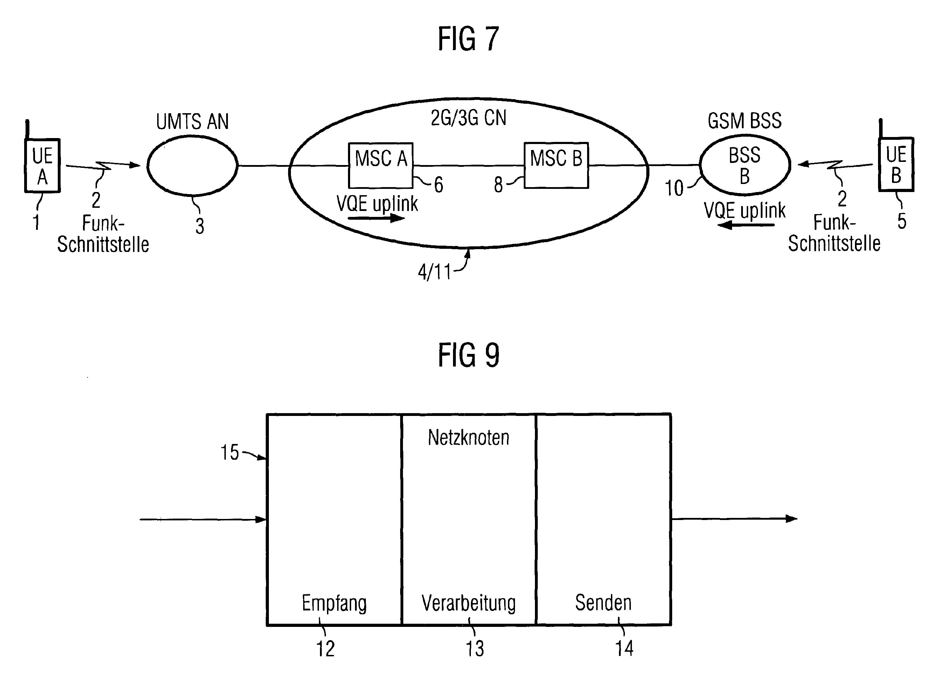

Figur 7 zeigt, wie eine Sprach-Qualitäts-Bearbeitung (VQE) bei einer Telekommunikationsverbindung zwischen einem Mobilfunkendgerät in einem UMTS-Netz und einem Mobilfunkendgerät 5 in einem GSM-Netz durchgeführt wird. Ein Mobilfunkendgerät 1 sendet Daten und/oder Sprache über eine Funk-Schnittstelle 2 zu einem UMTS-Zugangsnetz (UMTS AN) 3. Daten und/oder Sprache, die von einem Mobilfunkendgerät 1 gesendet werden, werden von einem UMTS-Zugangsnetz 3 zu einer Vermittlungseinrichtung (MSC) 6 in einem Kernnetz 4, 11 übermittelt. Die Vermittlungseinrichtung 6 leitet die Daten und/oder Sprache des Mobilfunkendgerätes 1 an weitere Vermittlungseinrichtungen 7, 8 weiter und führt zuvor für in Uplink-Richtung gesandte Daten eine Sprach-Qualitäts-Bearbeitung (VQE) durch. Die Vermittlungseinrichtung 6 leitet die Daten und/oder Sprache des Mobilfunkendgerätes 1 an eine Vermittlungseinrichtung 8 weiter. Über ein Basis-Station-Subsystem (BSS) 10 und eine Funk-Schnittstelle 2 empfängt ein weiteres Mobilfunkendgerät 5 die von einem Mobilfunkendgerät 1 gesendeten Daten und/oder Sprache. Das weitere Mobilfunkendgerät 5 sendet Daten und/oder Sprache über eine Funk-Schnittstelle 2 an ein Basis-Station-Subsystem (BSS) 10, das die Daten und/oder Sprache an die Vermittlungseinrichtung 8 weiterleitet. Zuvor führt das Basis-Station-Subsystem (BSS) 10 die Sprach-Qualitäts-Bearbeitung (VQE) in Uplink-Richtung durch. Danach werden die zu übermittelnden Daten und/oder Sprache über die Vermittlungseinrichtung 6 an ein UMTS-Zugangsnetz 3 weitergeleitet. Vom UMTS-Zugangsnetz 3 gelangen die Daten und/oder Sprache über eine Funk-Schnittstelle 2 zu dem ersten Mobilfunkendgerät 1.

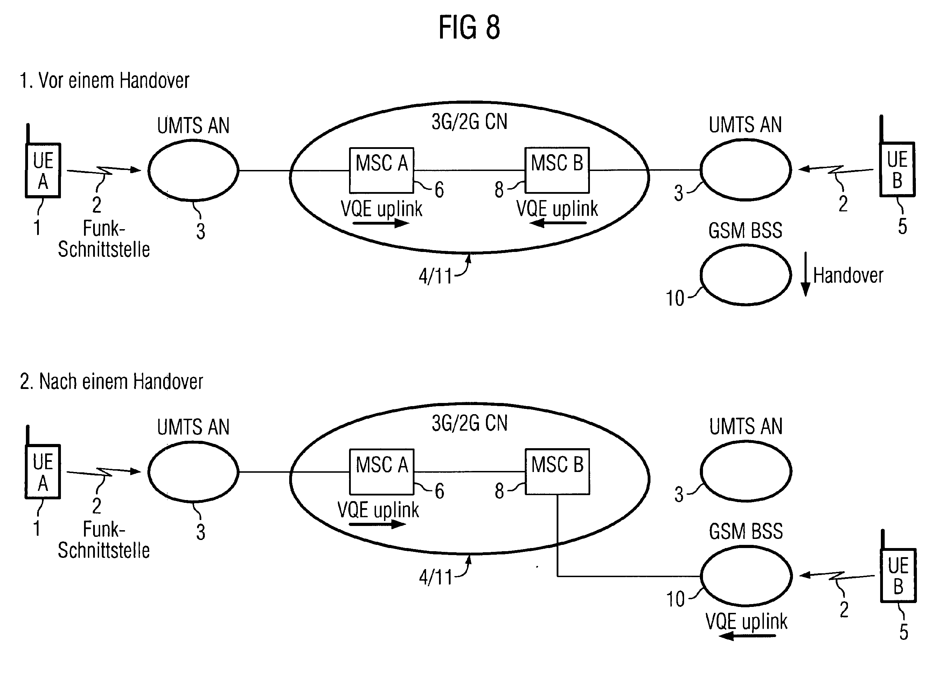

Figur 8 zeigt, wie nach einem Handover von einem UMTS-Netz zu einem GSM-Netz das Basis-Station-Subsystem (BSS) 10 eine Sprach-Qualitäts-Bearbeitung (VQE) durchführt, das sich längs der Telekommunikationsverbindung am nähesten an einer Funk-Schnittstelle 2 befindet. Ein Handover von einem GSM-Netz in ein UMTS-Netz folgt dem gleichen erfindungsgemäßen Verfahren. Vor einem Handover sendet ein Mobilfunkendgerät 5 über eine Funk-Schnittstelle 2 an ein UMTS-Zugangsnetz 3 Daten und/oder Sprache. Von dort werden die Daten und/oder Sprache an eine Vermittlungseinrichtung 8 weitergeleitet, die in Uplink-Richtung eine Sprach-Qualitäts-Bearbeitung (VQE) durchführt. Danach werden die Daten und/oder Sprache über eine Vermittlungseinrichtung 6, ein UMTS-Zugangsnetz 3 und eine Funk-Schnittstelle 2 an ein Mobilfunkendgerät 1 übermittelt. Das Mobilfunkendgerät 1 sendet Daten und/oder Sprache über eine Funk-Schnittstelle 2 zu einem UMTS-Zugangsnetz (UMTS AN) 3. Daten und/oder Sprache, die von einem Mobilfunkendgerät 1 gesendet werden, werden von einem UMTS-Zugangsnetz 3 zu einer Vermittlungseinrichtung (MSC) 6 in einem UMTS-Kernnetz 4, 11 übermittelt. Die Vermittlungseinrichtung 6, die eine Sprach-Qualitäts-Bearbeitung (VQE) durchführt, leitet die Daten und/oder Sprache des Mobilfunkendgerätes 1 an eine Vermittlungseinrichtung 8 weiter. Über ein Zugangsnetz 3 und eine Funk-Schnittstelle 2 empfängt das Mobilfunkendgerät 5 die von dem Mobilfunkendgerät 1 gesendeten Daten und/oder Sprache. Wird ein Handover durchgeführt, d.h. bewegt sich das Mobilfunkendgerät 5 z. B. vom UMTS-Zugangsnetz 3 zu einem GSM-Basis-Station-Subsystem (BSS) 10, so werden die Daten und/oder Sprache über eine Funk-Schnittstelle 2 an ein Basis-Station-Subsystem (BSS) 10 übermittelt. Die Sprach-Qualitäts-Bearbeitung (VQE) wird für in Uplink-Richtung gesandte Daten nun von dem Basis-Station-Subsystem (BSS) 10 durchgeführt, da dieses (10) sich am nähesten zu einer Funk-Schnittstelle 2 befindet. Die Daten und/oder Sprache werden dann über Vermittlungseinrichtungen 8, 6 in einem UMTS-Kernnetz 4, 11 an ein UMTS-Zugangsnetz (UMTS AN) 3 übermittelt und über eine Funk-Schnittstelle 2 an ein Mobilfunkendgerät 1 weitergeleitet.

Figur 9 zeigt, wie in einem Netzknoten 15 Daten und/oder Sprache mit einer Empfangseinheit 12 empfangen und an eine Verarbeitungseinheit zur Durchführung einer Sprach-Qualitäts-Bearbeitung (VQE) weitergeleitet werden. Nach der Sprach-Qualitäts-Bearbeitung (VQE) werden die Daten und/oder Sprache an eine Sendeeinheit zum Senden weitergeleitet. Ein solcher Netzknoten 15 kann z. B. ein Basis-Station-Subsystem (BSS) 10 in einem GSM Netz, eine Vermittlungseinrichtung (MSC) 6, 8 in einem UMTS Netz oder eine ähnliche Einrichtung in einem mobilen Kommunikationsnetz sein.

## Patentansprüche

1. Verfahren zur Verbesserung der Sprachqualität von über eine Telekommunikationsverbindung durch mindestens ein mobiles Kommunikationsnetz übertragenen Daten,
**dadurch gekennzeichnet,**
**dass** bei über eine Telekommunikationsverbindung übertragene Daten eine Sprach-Qualitäts-Bearbeitung von dem Netzknoten (6, 10, 8, 16, 17, 15) des Kommunikationsnetzes ausgeführt wird, der sich längs der Telekommunikationsverbindung am nähesten zu einer Funk-Schnittstelle (2) der Telekommunikationsverbindung befindet und
**dass** eine Sprach-Qualitäts-Bearbeitung nur bei in Uplink-Richtung übermittelten Daten durchgeführt wird.

2. Verfahren nach Anspruch 1
**dadurch gekennzeichnet,**
**dass** die Telekommunikationsverbindung zwischen zwei Mobilfunkendgeräten (1, 5) aufgebaut ist.

3. Verfahren nach Anspruch 1,
**dadurch gekennzeichnet,**
**dass** die Telekommunikationsverbindung zwischen einem Mobilfunkendgerät (1) in einem mobilen Kommunikationsnetz und einem Festnetzendgerät in einem stationären Netz (9) aufgebaut ist.

4. Verfahren nach einem der vorhergehenden Ansprüche,
**dadurch gekennzeichnet,**
**dass** das mobile Kommunikationsnetz ein Netz der dritten Generation ist.

5. Verfahren nach einem der vorhergehenden Ansprüche,
**dadurch gekennzeichnet,**
**dass** das mobile Kommunikationsnetz ein Netz der zweiten Generation ist.

6. Verfahren nach einem der vorhergehenden Ansprüche,
**dadurch gekennzeichnet,**
**dass** der Netzknoten (15) des Kommunikationsnetzes, der sich längs der Telekommunikationsverbindung am nähesten zur Funk-Schnittstelle (2) befindet, eine Einrichtung innerhalb eines Basis-Station-Subsystems (BSS) (10, 17) ist.

7. Verfahren nach einem der vorhergehenden Ansprüche,
**dadurch gekennzeichnet,**
**dass** das mobile Kommunikationsnetz aus mindestens zwei verschiedenen mobilen Kommunikationsnetzen besteht.

8. Verfahren nach einem der vorhergehenden Ansprüche,
**dadurch gekennzeichnet,**
**dass** der Netzknoten (15) des Kommunikationsnetzes, der sich längs der Telekommunikationsverbindung am nähesten zur Funk-Schnittstelle (2) befindet, eine Vermittlungseinrichtung (6, 8, 16) ist.

9. Netzknoten (6, 10, 8, 16, 17, 15) zur Verbesserung der Sprachqualität in einem mobilen Kommunikationsnetz, der sich längs einer Telekommunikationsverbindung am nähesten zu einer Funk-Schnittstelle (2) befindet,
- mit einer Empfangseinheit (12) zum Empfang übermittelter Daten,
- mit eine Verarbeitungseinheit (13) zum Durchführen einer Sprach-Qualitäts-Bearbeitung nur bei in Uplink-Richtung übertragenen Daten und
- mit eine Sendeeinheit (14) zum Weiterleiten der Daten in Uplink-Richtung besitzt.
